# EUROPÄISCHE PATENTANMELDUNG

(11) **EP 0 754 960 A1**
(43) Veröffentlichungstag der Anmeldung: **22.01.1997**
(21) Anmeldenummer: 96100504.8
(22) Anmeldetag: 16.01.1996
(51) Int. Cl.: G02C 9/04

(54) **Brillenaufsatz**

(30) Priorität: 13.07.1995 DE 29510983 U
(71) Anmelder: tlh-Design-Brillenfassungen GmbH, 35112 Fronhausen-Sichertshausen (DE)
(72) Erfinder: Lucki, Siegfried, 60439 Frankfurt (DE); Spandl, Ernst, 75438 Knittlingen (DE)
(74) Vertreter: KEIL & SCHAAFHAUSEN Patentanwälte

(57) **Zusammenfassung**

Es wird ein Brillenaufsatz beschrieben, bestehend aus einem Aufsatzglas und mehreren über den Umfang des Aufsatzglases verteilt angeordneten Befestigungsklemmen zur lösbaren Verbindung des Aufsatzglases mit einer Brillenfassung oder einem Brillenglas. Um den Brillenaufsatz einfach an beliebige Brillenformen anpassen zu können, ist im Umfang des Aufsatzglases eine Nut zur wenigstens teilweisen Aufnahme eines Spannfadens ausgebildet, wobei die Befestigungsklemmen über den Spannfaden an dem Aufsatzglas gehalten werden.

## Beschreibung

Die Erfindung betrifft einen Brillenaufsatz, bestehend aus einem Aufsatzglas und mehreren über den Umfang des Aufsatzglases verteilt angeordneten Befestigungsklemmen zur lösbaren Verbindung des Aufsatzglases mit einer Brillenfassung oder einem Brillenglas sowie eine Befestigungsklemme für einen solchen Aufsatz.

Brillenträger haben häufig das Problem, daß die geschliffenen Gläser ihrer normalen Brille keine oder nur eine geringe Tönung aufweisen, so daß sie durch grelles Sonnenlicht geblendet werden. Die Verwendung einer normalen Sonnenbrille ist im allgemeinen nicht möglich, da hierdurch Sehfehler nicht ausgeglichen werden. Ein Brillenträger muß daher eigentlich über zwei Brillen verfügen, nämlich seine normale Brille ohne oder allenfalls mit leichter Tönung sowie eine Sonnenbrille mit entsprechend geschliffenen Gläsern. Es ist aber nicht nur aufwendig, immer zwei Brillen mitzuführen, sondern auch teuer, da jeweils eine vollständige Brillenfassung mit geschliffenen Gläsern benötigt wird.

Es wurde daher bereits vorgeschlagen, einen Aufsatz mit getönten ungeschliffenen Gläsern auf die normale Brille aufzustecken. Da für den Brillenaufsatz keine geschliffenen Gläser erforderlich sind, ist seine Herstellung relativ kostengünstig. Bei einem solchen bekannten Brillenaufsatz sind zwei Aufsatzgläser gemeinsam in einer Fassung ohne Bügel vorgesehen. An der Fassung sind Befestigungsklemmen vorgesehen, über die der Brillenaufsatz auf eine Brille aufgeclipst werden kann. Solche Brillenaufsätze werden daher als sogenannte Sonnenclips verkauft. Dabei sind die Aufsatzgläser in einer Fassung aufgenommen, die nach dem Einsetzen der Aufsatzgläser wie die meisten Brillenfassungen durch eine Schraube geschlossen wird. Der Brillenaufsatz weist dabei wenigstens einen Steg auf, der die Fassungen der beiden Aufsatzgläser miteinander verbindet. Somit ist sowohl der Abstand als auch die Form der Aufsatzgläser durch die Form der Fassung festgelegt. Eine Anpassung an die große Zahl verschiedener Brillenformen ist nicht möglich. Zum einen wird dadurch die Wirkung des Sonnenclips beeinträchtigt, da die Aufsatzgläser die Brillengläser ggf. nur teilweise überdecken oder aber über diese herausragen. Außerdem verändert der Sonnenclip das Brillendesign, da einerseits die Form der Aufsatzgläser von der Form der Brillengläser abweicht und andererseits der Steg des Sonnenclips im allgemeinen sehr weit oben an der Fassung angesetzt ist, um die Elastizität des Aufsatzes zur Anpassung an verschiedene Brillenfassungen zu erhöhen.

Es ist auch bereits ein Brillenaufsatz bekannt, bei dem die Befestigungsklemmen, über die das Aufsatzglas auf die Brillengläser bzw. die diese umgebende Fassung aufgeklemmt werden kann, am Umfang der Aufsatzgläser angeklebt sind. Auch hierbei sind jedoch die Aufsatzgläser über eine Brücke miteinander verbunden, so daß die oben beschriebenen Nachteile auftreten. Ferner bereitet die Klebeverbindung zwischen den Befestigungsklemmen und dem Aufsatzglas erhebliche Probleme. So ist sowohl die Festigkeit als auch die Haltbarkeit der Klebeverbindung zwischen den Befestigungsklemmen und den Aufsatzgläsern beschränkt. Um überhaupt eine ausreichende Festigkeit in dieser Verbindung zu erzielen, sind große Klebeflächen erforderlich. Infolgedessen müssen die Befestigungsklemmen einen großen Halteabschnitt zur Verbindung mit dem Aufsatzglas aufweisen, der auch die Vorder- oder Rückseite des Aufsatzglases umgreift. Dadurch wird das Aussehen der Brille wiederum erheblich verändert. Außerdem stört die große Befestigungsklemme den Benutzer, da sie ständig in seinem Gesichtsfeld liegt. Dennoch ist die Haltbarkeit der geklebten Befestigungsklemmen begrenzt, da die Klebeverbindung beim Aufsetzen bzw. Abnehmen der Sonnenclips wechselnd in unterschiedlichen Richtungen beansprucht wird.

Aufgabe der vorliegenden Erfindung ist es daher, einen Brillenaufsatz der eingangs genannten Art derart weiterzubilden, daß er an beliebige Brillenformen anpaßbar ist, wobei die Befestigungsklemmen mit einfachen technischen Mitteln sicher an dem Aufsatzglas befestigbar sind. Außerdem soll eine Befestigungsklemme zur Verwendung bei einem solchen Brillenaufsatz geschaffen werden.

Diese Aufgabe wird im wesentlichen dadurch gelöst, daß im Umfang des Aufsatzglases eine Nut zur wenigstens teilweisen Aufnahme eines Spannfadens ausgebildet ist, und daß die Befestigungsklemmen über den Spannfaden an dem Aufsatzglas gehalten werden.

Durch den Spannfaden werden die Befestigungsklemmen fest, aber dennoch elastisch am Umfangsrand des Aufsatzglases befestigt. Dabei verhindert die Nut im Umfang des Aufsatzglases, daß der Spannfaden von dem Aufsatzglas abrutschen kann. Aufgrund der Elastizität des Spannfadens kann dieser leicht auf das Vorsatzglas aufgespannt werden. Die Aufsatzgläser können dabei beim Optiker entsprechend der Form der Brillengläser ausgebildet und mit einem Spannfaden entsprechender Länge umspannt werden. Der Spannfaden kann von einer Vorratsrolle oder dgl. beliebig abgelängt werden. Hierdurch wird eine äußerst einfache und flexible Herstellung des Brillenvorsatzes in Anpassung an jede beliebige Brille ermöglicht. Die Elastizität des Spannfadens bewirkt auch eine leichte Montage bzw. Demontage des Brillenaufsatzes auf/von der Brille, denn die Befestigungsklemme ist beim Aufsetzen leicht schwenkbar angeordnet, so daß die an den Befestigungsklemmen angreifenden Kräfte nicht zu deren Lösen sondern nur zu einem elastischen Nachgeben des Spannfadens führen. Hierdurch wird auch die mechanische Widerstandsfähigkeit der Verbindung Befestigungsklemme-Aufsatzglas verbessert.

Bei einer bevorzugten Ausgestaltung der Erfindung wir ein Herausrutschen aus der Nut dadurch gewährleistet, daß die Nut über den gesamten Umfang des Aufsatzglases umläuft. Andererseits kann eine ausreichende Befestigung des Spannfadens auch dadurch erreicht werden, daß die Nut lediglich in den Eckbereichen des Aufsatzglases vorgesehen ist.

Da die Breite und/oder die Tiefe der Nut erfindungsgemäß im wesentlichen dem Durchmesser des Spannfadens entsprechen, kann der Spannfaden nahezu vollständig in der Nut aufgenommen werden. Dies verhindert nicht nur besonders zuverlässig ein Herausrutschen des Spannfadens aus der Nut sondern bewirkt auch, daß der Spannfanden von der Forderseite des Brillenaufsatzes nicht sichtbar ist.

Vorteilhafterweise besteht der Spannfaden aus Nylon oder dergleichen. Nylon ist ein leicht zu verarbeitendes Material, das aufgrund seiner elastischen Eigenschaften und seiner hohen mechanischen Widerstandskraft für eine Verwendung als Spannfaden besonders geeignet ist.

Gemäß einer bevorzugten Ausführungsform der Erfindung ist vorgesehen, daß die Befestigungsklemmen einen Halteabschnitt, über den die Halterung an dem Aufsatzglas erfolgt, und einen Klemmabschnitt aufweisen, über den die Verbindung mit der Brillenfassung oder bei einer nichtgefaßten Brille mit dem Brillenglas erfolgt.

In einer Weiterbildung dieses Erfindungsgedankens ist ferner vorgesehen, daß der Halteabschnitt wenigstens zwei Durchtrittsöffnungen zur Durchführung des Spannfadens aufweist. Über dem zwischen den Durchtrittsöffnungen liegenden Abschnitt des Halteabschnitts klemmt der Spannfaden die Befestigungsklemme gegen den Umfang des Aufsatzglases, wobei ein Herausrutschen der Befestigungsklemme zwischen Spannfaden und Aufsatzglas durch die Durchführung verhindert wird. Ein Verrutschen der Befestigungsklemmen in Umfangsrichtung wird durch die zwischen den Durchtrittsöffnungen und dem Spannfaden entstehende Reibung verhindert, wobei die Reibung um so größer ist, je kleiner die Radien sind, um die der Spannfaden bei seinem Verlauf um und durch die Befestigungsklemme gebogen wird.

Bei einer besonders vorteilhaften Ausgestaltung des Erfindungsgedankens ist vorgehen, daß der Halteabschnitt auf seiner dem Aufsatzglas zugewandten Seite eine Nut zur teilweisen Aufnahme des Spannfadens aufweist. Dadurch kommt der Halteabschnitt der Befestigungsklemme direkt an dem Umfang des Vorsatzglases zu liegen, was die Anlagefläche zwischen Halteabschnitt und Aufsatzglas vergrößert und ihrer Verbindung somit eine größere Stabilität gibt.

Um das Aufsatzglas besonders einfach auf eine Brillenfassung oder ein Brillenglas aufclipsen zu können ist vorgesehen, daß an dem Klemmabschnitt der Befestigungsklemme auf der dem Aufsatzglas zugewandten Seite zwei Stege ausgebildet sind, deren Abstand etwa der Dicke der Brillenfassung oder des Brillenglases entspricht. Nach dem Aufsetzen umgreifen die beiden Stege die Brillenfassung bzw. den Rand des Brillenglases.

Damit die Stege den Benutzer nicht stören, ist vorgesehen, daß die Höhe der Stege des Klemmabschnitts etwa der Breite der Brillenfassung entspricht, so daß die Stege nicht über die Brillenfassung hinaus das Brillenglas überdecken.

Vorteilhafterweise weist die Befestigungsklemme zwei Klemmabschnitte auf, dadurch kann die Befestigungsklemme bspw. den Steg der Brille zwischen den beiden Klemmabschnitten aufnehmen und ein Verrutschen des Aufsatzglases auf der Brille verhindern. Dafür ist es ausreichend, wenn lediglich eine der Befestigungsklemmen jedes Aufsatzglases zwei Klemmabschnitte aufweist.

In Anpassung an das Material der Brille bzw. Brillenfassung mit der der Brillenaufsatz verwendet wird, besteht die Befestigungsklemme vorzugsweise aus Metall oder Kunststoff.

Gemäß einer weiteren bevorzugten Ausführungsform der Erfindung ist vorgesehen, daß die Enden des Spannfadens von der dem Aufsatzglas zugewandten Seite der Befestigungsklemme durch die Durchtrittsöffnungen des Halteabschnitts geführt sind und miteinander verschweißt oder durch Anschmelzen verdickt sind, um ein Herausrutschen des Spannfadens aus dem Halteabschnitt zu verhindern. Auf diese Weise können die Enden des Spannfadens dauerhaft in dem Halteabschnitt der Befestigungsklemme befestigt werden. Bereits das Führen des Spannfadens durch mehrere Durchtrittsöffnungen bewirkt, insbesondere wenn die Biegeradien des Spannfadens gering sind, daß durch die entstehende Reibung ein Herausrutschen des Spannfadens aus dem Halteabschnitt weitgehend vermieden wird. Durch Verdicken oder gar Verschweißen der Spannfadenenden wird ein Herausrutschen der Spannfadenenden mit Sicherheit vermieden.

Damit die Befestigungsklemmen fest an dem Aufsatzglas befestigt sind, ist vorgesehen, daß der Spannfaden eine solche Länge aufweist, daß er stramm in der Nut des Aufsatzglases sitzt.

Eine Befestigungsklemme zur Verwendung bei einem erfindungsgemäßen Brillenaufsatz weist einen Halteabschnitt mit wenigstens zwei Durchtrittsöffnungen und wenigstens einem Klemmabschnitt mit zwei in vorbestimmtem Abstand zu einer Seite des Klemmabschnitts weisenden Stegen auf. Über die beiden Durchtrittsöffnungen im Halteabschnitt der Befestigungsklemme kann diese einfach und dauerhaft mittels eines Spannfadens an einem Aufsatzglas befestigt werden, indem der Spannfaden durch die Durchtrittsöffnungen geführt wird und die Befestigungsklemme bspw. über den zwischen den Durchtrittsöffnungen liegenden Abschnitt gegen den Umfang des Aufsatzglases drückt, wobei ein Abrutschen der Befestigungsklemme von dem Spannfaden zuverlässig verhindert wird. Die Befestigungsklemme weist darüber hinaus einen Klemmabschnitt zur Befestigung an einer Brille auf, wobei der Abstand der Stege an die Dicke dor Brillenfassung bzw. des Brillenglases, auf die/das der Brillenaufsatz aufgesteckt werden soll, angepaßt ist.

In einer Weiterbildung dieses Erfindungsgedankens ist vorgesehen, daß die Befestigungsklemme einen Halteabschnitt mit sechs Durchtrittsöffnungen und zwei Klemmabschnitte aufweist. Durch die sechs Durchtrittsöffnungen kann der Spannfaden hindurchgeführt werden, der aufgrund der entstehenden hohen Reibung fest in dem Halteabschnitt gehalten wird. Dabei können die beiden Enden des Spannfadens durch jeweils drei benachbarte Durchtrittsöffnungen geführt werden, wobei die Enden aufgrund der entstehenden Reibung zuverlässig in dem Halteabschnitt gehalten werden. Da die Befestigungsklemme aufgrund der sechs Durchtrittsöffnungen ohnehin eine gewisse Größe aufweist, können an dieser zwei Klemmabschnitte mit den oben erwähnten Vorteilen besonders einfach vorgesehen werden.

Weiterbildungen, Vorteile und Anwendungsmöglichkeiten der Erfindung ergeben sich aus der nachfolgenden Beschreibung von Ausführungsbeispielen und der Zeichnung. Dabei bilden alle beschriebenen und/oder bildlich dargestellten Merkmale für sich oder in beliebiger Kombination den Gegenstand der Erfindung, unabhängig von ihrer Zusammenfassung in den Ansprüchen oder deren Rückbeziehung.

Es zeigen:
- Fig. 1: eine perspektivische Darstellung eines erfindungsgemäßen Brillenaufsatzes,
- Fig. 2: eine Vorderansicht einer Befestigungsklemme gemäß einer ersten Ausführungsform der Erfindung,
- Fig. 3: eine Seitenansicht der Befestigungsklemme gemäß Fig. 2,
- Fig. 4: eine Draufsicht auf die Befestigungsklemme gemäß Fig. 2,
- Fig. 5: eine Vorderansicht einer Befestigungsklemme gemäß einer zweiten Ausführungsform der Erfindung und
- Fig. 6: einen schematischen Teilschnitt durch eine an dem Aufsatzglas befestigte Befestigungsklemme.

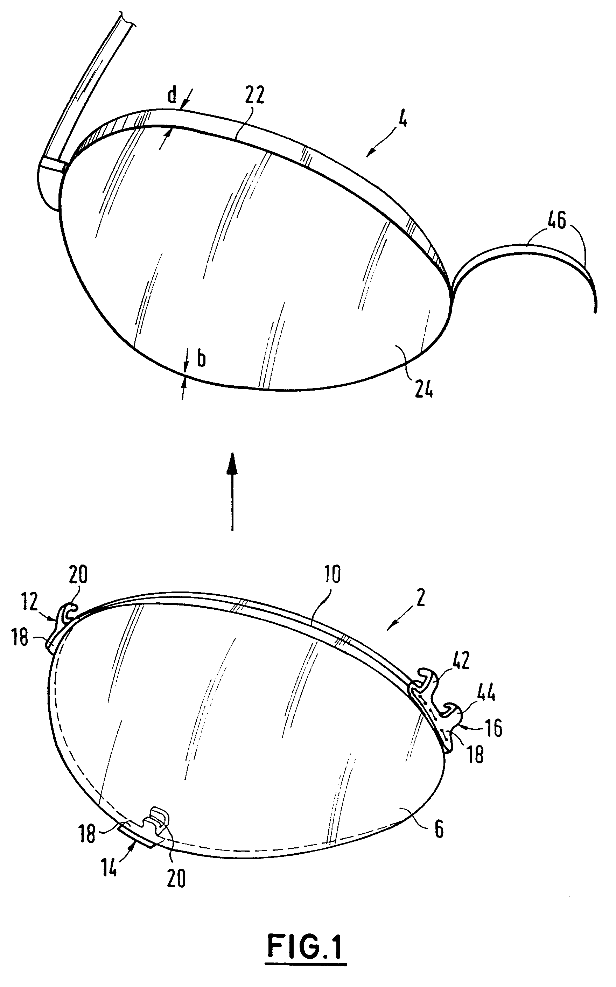

Fig. 1 zeigt einen Brillenaufsatz 2 zum Aufsetzen (Aufclipsen) auf eine nur teilweise dargestellte Brille 4.

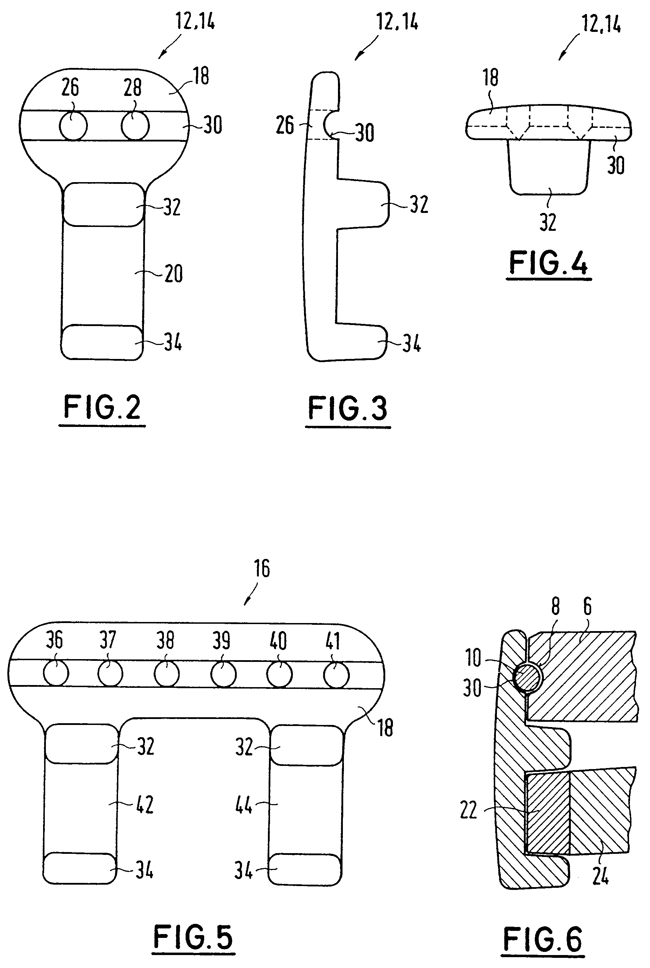

Der Brillenaufsatz 2 besteht im wesentlichen aus einem insbesondere getönten Aufsatzglas 6, in dessen Umfang eine umlaufende Nut 8 ausgebildet ist. Bei einer anderen, nicht dargestellten Ausführungsform kann die Nut 8 auch lediglich in den Eckbereichen des Aufsatzglases 6 ausgebildet sein. In der Nut 8 ist ein Spannfaden 1 teilweise aufgenommen, über den Befestigungsklemmen 12, 14 und 16 an dem Aufsatzglas 6 gehalten werden. Wie sich aus Fig. 6 ergibt, entspricht der Durchmesser der Nut 8 im wesentlichen dem Durchmesser des Spannfadens 10, so daß dieser halb in der Nut 8 aufgenommen ist. Wird die Nut 8 tiefer ausgebildet, so kann sie den Spannfaden in größerem Maße oder sogar vollständig aufnehmen.

Bezugnehmend auf die Figuren 2 bis 4 wird nun die Befestigungsklemme 12, 14 näher beschrieben.

Die Befestigungsklemme 12, 14 weist einen Halteabschnitt 18, über den die Halterung an dem Aufsatzglas 6 erfolgt, und einen Klemmabschnitt 20 auf, über den die Verbindung des Brillenaufsatzes 2 mit einer Brillenfassung 22 oder bei nichtgefaßten Brillen direkt mit einem Brillenglas 24 der- Brille 4 erfolgt.

In dem Halteabschnitt 18 sind zwei Durchtrittsöffnungen 26, 28 zur Durchführung des Spannfadens 10 ausgebildet. Auf der dem Aufsatzglas 6 zugewandten Seite des Halteabschnitts 18 ist eine Nut 30 ausgebildet, die sich über die gesamte Breite des Halteabschnitts 18 erstreckt und mit den Durchtrittsöffnungen 26, 28 fluchtet. Die Nut 30 ist halbkreisförmig ausgebildet, wobei ihr Durchmesser in etwa der Dicke des Spannfadens 10 entspricht.

Der Klemmabschnitt 20 weist zwei Stege 32, 34 auf, deren Abstand etwa der Dicke d der Brillenfassung 22 bzw. des Brillenglases 24 entspricht. Die Höhe der Stege 32, 34 entspricht etwa der Breite b der Brillenfassung 22.

Das Material, aus dem die Befestigungsklemmen 12, 14 und 16 hergestellt sind, wird in Abhängigkeit von dem Material der Brillenfassung 22 ausgewählt. Besteht diese aus Metall, so werden auch die Befestigungsklemmen 12, 14 und 16 aus Metall hergestellt. Bei Kunststoffassungen 22 oder ungefaßten Brillengläsern 24, bei welchen der Brillenaufsatz 2 direkt auf das Brillenglas 24 aufgesetzt wird, werden dagegen die Befestigungselemente 12, 14 und 16 aus Kunstoff hergestellt, um die Fassung 22 bzw. das Brillenglas 24 nicht zu beschädigen. Hierbei ist es wegen der geringeren möglichen Klemmkraft außerdem zweckmäßig, die Klemmabschnitte 20 breiter auszubilden, um einen besseren Halt an der Brillenfassung 22 bzw. dem Brillenglas 24 zu erhalten.

Zur Montage der Befestigungsklemmen 12, 14 an dem Aufsatzglas 6 wird zunächst der Spannfaden 10 von der dem Aufsatzglas 6 zugewandten Seite des Halteabschnitts 22 durch die Durchtrittsöffnung 26 und zurück durch die Durchtrittsöffnung 28 geführt, so daß die Befestigungsklemme 12, 14 insbesondere durch die Reibung an den Biegeradien verschiebesicher auf dem Spannfaden 10 gehalten wird. Der nicht in der Nut 8 des Aufsatzglases 6 aufgenommene Teil des Spannfadens 10 wird in den äußeren Abschnitten des Halteabschnitts 18 in der Nut 30 aufgenommen, so daß der Halteabschnitt 18 vollflächig an dem Aufsatzglas 6 anliegen kann und die Verbindung eine größere Stabilität erreicht.

Die in Fig. 5 dargestellte Befestigungsklemme 16 entspricht im wesentlichen den Befestigungsklemmen 12, 14 bis auf die Tatsache, daß sie wesentlich breiter als diese ausgebildet ist und sechs Durchtrittsöffnungen 36, 37, 38, 39, 40, 41 für den Spannfaden 10 und zwei Klemmabschnitte 42, 44 zur Verbindung mit der Brille 4 aufweist. Die Befestigungsklemme 16 dient im wesentlichen der Zusammenführung der Enden des Spannfadens 10 bei der Erstmontage des Brillenaufsatzes 6. Die Enden des Spannfadens 10 werden derart durch die Durchtrittsöffnungen 36 bis 41 der Befestigungsklemme 16 gefädelt, daß sie an den beiden mittleren Durchtrittsöffnungen 38 und 39 von der dem Aufsatzglas 6 zugewandten Seite der Befestigungsklemme 16 nach außen austreten. Nun können die Enden des bspw. aus Nylon bestehenden Spannfadens 10 miteinander verschweißt werden oder einfach durch Anschmelzen verdickt werden, so daß sie nicht durch die Durchtrittsöffnungen 38, 39 zurückrutschen können. Hierbei wird die Länge des Spannfadens 10 derart gewählt, daß dieser unter elastischer Dehnung auf das Aufsatzglas 6 aufgeschoben werden kann und in die Nut 8 des Aufsatzglases 6 einschnappt. In zusammengebautem Zustand des Brillenaufsatzes 2 sitzt der Spannfaden 10 stramm in der Nut 8 des Aufsatzglases 6.

Der Brillenaufsatz 2 kann nun an der Brille 4 befestigt werden, indem die Befestigungsklemmen 12, 14, 16 gegen die elastische Kraft des Spannfadens 10 leicht nach außen gebogen werden, und die Klemmabschnitte 20 und 42, 44 über die Brillenfassung 22 geschoben werden. Hierbei umgreifen die Stege 32, 34 der Klemmabschnitte 20, 42, 44, deren Abstand etwa der Dicke d der Brillenfassung entspricht, die Brillenfassung 22, so daß der Brillenaufsatz 6 im wesentlichen verrutschsicher an der Brille 4 gehalten wird. Hierbei können die beiden Klemmabschnitte 43, 44 einen Steg 46 der Brillenfassung 22 zwischen sich aufnehmen, so daß eventuelle Verschiebungen des Brillenaufsatzes 2 verhindert werden, da der Brillenaufsatz 2 sich an dem Steg 46 der Brillenfassung 22 abstützen kann.

Der Brillenaufsatz 2 ist in seiner Form an die Brillenfassung 22 derart angepaßt, daß das Brillenglas 24 und das Aufsatzglas 6 im wesentlichen deckungsgleich sind. Hierbei kann der Brillenaufsatz 2 auf einfache Weise für jede beliebige Brillenform hergestellt werden, da lediglich das Aufsatzglas 6 in die der Brillenfassung 22 bzw. dem Brillenglas 24 entsprechende Form gebracht werden muß, während die Befestigungsklemmen 12, 14, 16, die in verschiedenen Größen bereitliegen können, je nach Brillenfassung 22 ausgewählt und über einen Universalspannfaden 10, der von einer Vorratsrolle abgewickelt werden kann, an dem Aufsatzglas 6 befestigt werden können. Der Spannfaden 10 kann in dem Umfang des Aufsatzglases 6 entsprechender Länge abgelängt werden. Damit wird ein Brillenaufsatz 2 geschaffen, mit dem eine Brille 4 ohne wesentliche Veränderung ihres Designs auf einfache Weise mit getönten Aufsatzgläsern 6 versehen werden kann.

### Bezugszeichenliste:

- 2: Brillenaufsatz
- 4: Brille
- 6: Aufsatzglas
- 8: Nut
- 10: Spannfaden
- 12: Befestigungsklemme
- 14: Befestigungsklemme
- 16: Befestigungsklemme
- 18: Halteabschnitt
- 20: Klemmabschnitt
- 22: Brillenfassung
- 24: Brillenglas
- 26: Durchtrittsöffnung
- 28: Durchtrittsöffnung
- 30: Nut
- 32: Steg
- 34: Steg
- 36-41: Durchtrittsöffnungen
- 42: Klemmabschnitt
- 44: Klemmabschnitt
- 46: Steg
- b: Breite der Brillenfassung
- d: Dicke der Brillenfassung

## Patentansprüche

1. Brillenaufsatz, bestehend aus einem insbesondere getönten Aufsatzglas (6) und mehreren über den Umfang des Aufsatzglases (6) verteilt angeordneten Befestigungsklemmen (12, 14, 16) zur lösbaren Verbindung des Aufsatzglases (6) mit einer Brillenfassung (22) oder einem Brillenglas (24), **dadurch gekennzeichnet**, daß im Umfang des Aufsatzglases (6) eine Nut (8) zur wenigstens teilweisen Aufnahme eines Spannfadens (10) ausgebildet ist, und daß die Befestigungsklemmen (12, 14, 16) über den Spannfaden (10) an dem Aufsatzglas (6) gehalten werden.

2. Brillenaufsatz nach Anspruch 1, **dadurch gekennzeichnet**, daß die Nut (8) über den Umfang des Aufsatzglases (6) umläuft.

3. Brillenaufsatz mach Anspruch 1, **dadurch gekennzeichnet**, daß die Nut (8) lediglich in den Eckbereichen des Aufsatzglases (6) vorgesehen ist.

4. Brillenaufsatz nach einem der Ansprüche 1 bis 3, **dadurch gekennzeichnet**, daß die Breite und/oder Tiefe der Nut (8) im wesentlichen dem Durchmesser des Spannfadens (10) entsprechen.

5. Brillenaufsatz nach einem der Ansprüche 1 bis 4, **dadurch gekennzeichnet**, daß der Spannfaden (10) aus Nylon oder dgl. besteht.

6. Brillenaufsatz nach einem der Ansprüche 1 bis 5, **dadurch gekennzeichnet**, daß die Befestigungsklemme (12, 14, 16) einen Halteabschnitt (18), über den die Halterung an dem Aufsatzglas (6) erfolgt, und einen Klemmabschnitt (20, 42, 44) aufweist, über den die Verbindung mit der Brillenfassung (22) oder dem Brillenglas (24) erfolgt.

7. Brillenaufsatz nach Anspruch 6, **dadurch gekennzeichnet**, daß der Halteabschnitt (18) wenigstens zwei Durchtrittsöffnungen (26, 28) zur Durchführung des Spannfadens (10) aufweist.

8. Brillenaufsatz nach Anspruch 6 oder 7, **dadurch gekennzeichnet**, daß der Halteabschnitt (18) sechs Durchtrittsöffnungen (36 bis 41) zur Durchführung des Spannfadens (10) aufweist.

9. Brillenaufsatz nach einem der Ansprüche 6 bis 8 **dadurch gekennzeichnet**, daß der Halteabschnitt (18) auf seiner dem Aufsatzglas (6) zugewandten Seite eine Nut (30) zur teilweisen Aufnahme des Spannfadens (10) aufweist.

10. Brillenaufsatz nach einem der Ansprüche 6 bis 9, **dadurch gekennzeichnet**, daß an dem Klemmabschnitt (20, 42, 44) der Befestigungsklemme (12, 14, 16) auf der dem Aufsatzglas (6) zugewandten Seite zwei Stege (32, 34) ausgebildet sind, deren Abstand etwa der Dicke (d) der Brillenfassung (22) oder des Brillenglases (24) entspricht.

11. Brillenaufsatz nach Anspruch 10, **dadurch gekennzeichnet**, daß die Höhe der Stege (32, 34) des Klemmabschnitts (20, 42, 44) etwa der Breite (b) der Brillenfassung (22) entspricht.

12. Brillenaufsatz nach einem der Ansprüche 6 bis 11, **dadurch gekennzeichnet**, daß die Befestigungsklemme (16) zwei Klemmabschnitte (42, 44) aufweist.

13. Brillenaufsatz nach einem der Ansprüche 1 bis 12, **dadurch gekennzeichnet**, daß die Befestigungsklemme (12, 14, 16) aus Metall oder Kunststoff besteht.

14. Brillenaufsatz nach einem der Ansprüche 1 bis 13, **dadurch gekennzeichnet**, daß die Enden des Spannfadens (10) von der dem Aufsatzglas (6) zugewandten Seite der Befestigungsklemme (12, 14, 16) durch die Durchtrittsöffnungen (26, 28, 36-41) des Halteabschnitts (18) geführt sind und miteinander verschweißt oder beispielsweise durch Erwärmen verdickt sind, um ein Herausrutschen des Spannfadens (10) aus dem Halteabschnitt (18) zu verhindern.

15. Brillenaufsatz nach einem der Ansprüche 1 bis 14, **dadurch gekennzeichnet**, daß der Spannfaden (10) eine solche Länge aufweist, daß er stramm in der Nut des Aufsatzglases (6) sitzt.

16. Befestigungsklemme, insbesondere zur Verwendung bei einem Brillenaufsatz nach einem der Ansprüche 1 bis 15, **gekennzeichnet durch** einen Halteabschnitt (18) mit wenigstens zwei Durchtrittsöffnungen (26, 28, 36-41) und wenigstens einem Klemmabschnitt (20, 42, 44) mit zwei in vorbestimmtem Abstand zu einer Seite des Klemmabschnitts (20, 42, 44) weisenden Stegen (32, 34).

17. Befestigungsklemme nach Anspruch 16, **gekennzeichnet durch** einen Halteabschnitt (18) mit sechs Durchtrittsöffnungen (36 bis 41) und zwei Klemmabschnitte (42, 44).
